# EUROPÄISCHE PATENTSCHRIFT

(11) **EP 1 530 527 B1**
(45) Veröffentlichungstag und Bekanntmachung des Hinweises auf die Patenterteilung: **31.10.2007**
(21) Anmeldenummer: 03792125.1
(22) Anmeldetag: 01.08.2003
(51) Int. Cl.: B60T 7/22, B60T 7/12

(54) **VERFAHREN UND VORRICHTUNG ZUR AUTOMATISCHEN EINLEITUNG EINES NOTBREMSVORGANGS BEI KRAFTFAHRZEUGEN**
METHOD AND DEVICE FOR AUTOMATICALLY INITIATING AN EMERGENCY BRAKE PROCEDURE IN MOTOR VEHICLES
PROCEDE ET DISPOSITIF POUR DECLENCHER AUTOMATIQUEMENT UN PROCESSUS DE FREINAGE D'URGENCE DANS UN VEHICULE

(30) Priorität: 17.08.2002 DE 10237714
(43) Veröffentlichungstag der Anmeldung: 18.05.2005
(73) Patentinhaber: ROBERT BOSCH GMBH, 70442 Stuttgart (DE); Volkswagen AG, 38436 Wolfsburg (DE); AUDI AG, 85045 Ingolstadt (DE)
(72) Erfinder: VON HOLT, Volker, 38106 Braunschweig (DE); MEINKE, Ingo, 38122 Braunschweig (DE); MAURER, Markus, 85113 Böhmfeld (DE); OECHSLE, Fred, 71642 Ludwigsburg (DE); THIELE, Joachim, 71732 Tamm (DE); AHLRICHS, Ulrike, 85051 Ingolstadt (DE); HEINEBRODT, Martin, 70176 Stuttgart (DE); LUCAS, Bernhard, 74354 Besigheim (DE)
(86) Internationale Anmeldenummer: PCT/DE2003/002588
(87) Internationale Veröffentlichungsnummer: WO 2004/018272

(56) Entgegenhaltungen:
- EP-A- 0 519 287
- DE-A- 19 738 611
- DE-A- 19 748 898
- DE-A- 19 806 687
- US-A- 4 048 613
- US-A- 6 017 102
- US-B1- 6 238 021
- PATENT ABSTRACTS OF JAPAN vol. 1995, no. 04, 31. Mai 1995 (1995-05-31) & JP 07 017346 A (TOYOTA MOTOR CORP), 20. Januar 1995 (1995-01-20)

## Beschreibung

Die Erfindung betrifft ein Verfahren zur automatischen Einleitung eines Notbremsvorgangs mit vorausgehender Warnbremsung bei Kraftfahrzeugen sowie eine Steuervorrichtung zur Durchführung dieses Verfahrens.

### Stand der Technik

Kraftfahrzeuge werden zunehmend mit Fahrerassistenzsystemen ausgerüstet, die den Fahrer bei der Fahrzeugführung unterstützen und ihm die Durchführung bestimmter Fahrmanöver erleichtern. Ein Beispiel für ein bekanntes Fahrerassistenzsystem ist ein radargestütztes Abstandswarnsystem oder Abstandsregelsystem (ACC; Adaptive Cruise Control), bei dem mit Hilfe eines vorn am Fahrzeug montierten Radarsensors der Abstand und die Relativgeschwindigkeit eines vorausfahrenden Fahrzeugs gemessen wird und bei Unterschreitung eines bestimmten Sicherheitsabstands, der auch von der Eigengeschwindigkeit des Fahrzeugs abhängig ist, eine Warnung an den Fahrer ausgegeben oder der Abstand zum vorausfahrenden Fahrzeug durch einen Eingriff in das Antriebs- und/oder Bremssystem des Fahrzeugs selbsttätig geregelt wird.

In DE 43 10 354 A1 wird ein Abstandsregelsystem dieser Art beschrieben, bei dem, wenn bei Annäherung an ein vorausfahrendes Fahrzeug ein bestimmter Warnabstand unterschritten wird, zunächst eine relativ sanfte Warnbremsung ausgeführt wird, um den Fahrer sowie die Fahrzeuginsassen und ggf. den Nachfolgeverkehr auf ein bevorstehendes Bremsmanöver vorzubereiten, und bei dem dann, wenn der Abstand zum vorausfahrenden Fahrzeug weiter abnimmt, ein automatischer Eingriff in das Bremssystem erfolgt, mit dem Ziel, den Abstand auf den Sollabstand zu regeln. Nach diesem Vorschlag soll die Warnbremsung zugleich dazu benutzt werden, nähere Erkenntnisse über den Reibungskoeffizienten der Fahrbahn zu gewinnen, der von der Fahrbahnbeschaffenheit, dem Reifenzustand sowie den Witterungsbedingungen abhängig ist und der seinerseits das Bremsvermögen und damit den Anhalteweg des Fahrzeugs beeinflußt. Die bei der Warnbremsung gewonnenen Informationen über den Reibungskoeffizienten werden dann dazu benutzt, den Sollwert für die Abstandsregelung zu verändern. Wenn sich bei der Warnbremsung zeigt, daß die Fahrbahn einen relativ kleinen Reibungskoeffizienten hat, wird ein entsprechend größerer Sollabstand gewählt, so daß die Fahrsicherheit erhöht wird.

Aus der DE 199 26 744 A1 ist ein Bremssteuerungssystem für ein Fahrzeug bekannt, bei dem eine automatische Bremsung zur Vermeidung eines Kontakts eines Fahrzeug mit einem Objekt verhindert werden soll, indem das Fahrzeug aufgrund von abnormalen Straßenoberflächenzuständen instabil wird. Hierzu werden die Reibungskoeffizienten der Straßenoberfläche für die rechten und linken Räder ermittelt. Wird ein Objekt vor dem Fahrzeug mittels einer Radarvorrichtung erkannt und besteht die Möglichkeit, dass das Fahrzeug mit dem Objekt in Kontakt kommt, so löst das automatische Bremssystem die Bremsvorrichtung aus, um eine automatische Bremsung durchzuführen. Zum Zeitpunkt des Beginns der automatischen Bremsung wird dann, wenn ein abnormaler Straßenoberflächenzustand erkannt wurde, indem die Reibungskoeffizienten der Straßenoberfläche für die rechten und linken Räder unterschiedliche sind, der Gradient der Bremskraft der automatischen Bremsung auf einen niedrigen Wert abgesenkt, der ein instabiles Fahrzeugverhalten verhindern soll.

Aus der EP 0 519 287 A1 ist ein Kollisionsverhinderungssystem für ein Fahrzeug mit einem Detektor zum Erfassen eines Betriebsparameters zwischen einem eigenen Fahrzeug und einem Kontrasthindernis zur Bewertung einer Kollisionsmöglichkeit des eigenen Fahrzeugs gegen das Kontrasthindernis bekannt, wobei Bremsen auf Basis eines von dem Detektor erfassten Erfassungswerts bestätigt werden und das System einen ersten Komparator aufweist, mittels dem der Erfassungswert des Detektors mit einem ersten Bezugswert verglichen wird und auf Basis des Ergebnisses dieses Vergleich ein Bremssteuersignal erzeugt wird, das einen Befehl zur fortlaufenden Betätigung jeder der Bremsen veranlasst.

Aus der JP-07017346 ist ein Kollisionsverhinderungssystem bekannt, bei dem der Abstand zwischen dem Fahrzeug und einem vorausbefindlichen Fahrzeug ermittelt wird und hieraus der Grad der Kollisionsgefahr zwischen diesen beiden Fahrzeugen ermittelt wird. Unterschreitet der Zwischenfahrzeugabstand einen ersten Zwischenfahrzeugabstand, so werden die Bremsen leicht angesteuert, um den Reibkoeffizient während dieser leichten Bremsung zu ermitteln. Unterschreitet der Zwischenfahrzeugabstand einen zweiten Fahrzeugzwischenabstandswert, so werden die Bremsen voll angesteuert, um die Kollision zu verhindern.

Aus der DE 197 38 611 A1 ist eine automatische Notbremsfunktion bekannt, bei der ein Erfassungssystem laufend in oder nahe der Bewegungsrichtung des Fahrzeugs befindliche Hindernisse erfasst und diese an eine Auswerteeinrichtung weitergemeldet werden. An dem Fahrzeug oder einzeln an seinen Baugruppen angeordnete Sensoren ermitteln laufend charakteristische Messgrößen des Fahrzeugzustands und leiten diese an eine Auswerteeinrichtung weiter, wobei die Auswerteeinrichtung aus den weitergemeldeten Daten über die Hindernisse und den Messgrößen des Fahrzeugzustands laufend Sollwerte zur Beeinflussung der Fahrzeugbewegung ermittelt und gegebenenfalls eine automatische Notbremsung ausgelöst wird.

Die vorliegende Erfindung befaßt sich hingegen mit einem anderen Aspekt eines Fahrerassistenzsystems, nämlich mit einer automatischen Notbremse. Hier geht es darum, bei relativ plötzlich auftretenden Hindernissen einen automatischen Notbremsvorgang einzuleiten, falls der Fahrer selbst das Hindernis nicht rechtzeitig bemerkt oder nicht schnell genug reagiert. Durch die automatische Einleitung der Notbremsung soll in diesen Fällen die akute Kollisionsgefahr vermieden werden oder, sofern die Kollision bereits unvermeidlich ist, soll zumindest der Schaden, insbesondere der Personenschaden begrenzt werden.

Auch die Funktion der automatischen Notbremse beruht auf der automatischen Hinderniserkennung mit Hilfe eines Radarsensors oder einer vergleichbaren Sensorik. Auf der Grundlage der automatischen Hinderniserkennung und einer sachgerechten Situationsbewertung muß das System dann entscheiden, ob bzw. wann eine Notbremsung einzuleiten ist. Auch hier ist vorgesehen, daß der eigentlichen Notbremsung eine Warnbremsung vorangeht, die in erster Linie den Zweck hat, den Fahrer auf die Gefahrensituation aufmerksam zu machen und ihn zu einem aktiven Eingreifen in das Geschehen zu veranlassen.

Dabei ist generell davon auszugehen, daß die Fahrzeuge, die mit einer solchen automatischen Notbremse ausgerüstet sind, auch über ein Antiblockiersystem (ABS) und/oder ein elektronisches Stabilitätsprogramm (ESP) zur Stabilisierung der Fahrdynamik verfügen. Diese Systeme stellen sicher, daß das Fahrzeug auch bei einer Vollbremsung noch manövrierfähig bleibt. Die bevorzugte Kollisionsvermeidungsstrategie besteht demgemäß in der Regel nicht darin, das Fahrzeug bei starr gehaltener Lenkung möglichst rasch in den Stand zu bremsen, sondern vielmehr darin, während des fortdauernden Bremsvorgangs durch einen Eingriff in die Lenkung ein Ausweichmanöver vorzunehmen, um das Hindernis möglichst zu umfahren.

In vielen Fällen, beispielsweise wenn das Hindernis durch ein langsames Fahrzeug gebildet wird, das plötzlich aus der rechten Nebenspur ausschert, wird der Fahrer versuchen, die Gefahrensituation auch auf andere Weise zu beseitigen, etwa indem er den Fahrer des ausscherenden Fahrzeugs durch Betätigen der Hupe oder Lichthupe warnt oder indem er sich - bei dreispuriger Fahrbahn - über den Folgeverkehr orientiert, um zu prüfen, ob ein Ausweichen auf die linke Nebenspur möglich ist. Der Fahrer sieht sich daher plötzlich mit der Notwendigkeit konfrontiert, eine Vielzahl von Aktivitäten praktisch gleichzeitig vorzunehmen. Dabei kann es leicht zu einer Überforderung kommen, mit der Folge, daß der Fahrer selbst die erforderliche Notbremsung um entscheidende Sekundenbruchteile zu spät einleitet. Vor diesem Hintergrund stellt die automatische Notbremsfunktion eine sinnvolle, die Fahrsicherheit erhöhende Unterstützungsmaßnahme dar.

Entscheidend für den Erfolg und die Akzeptanz der automatischen Notbremse ist jedoch, daß die Notbremsfunktion einerseits rechtzeitig, andererseits jedoch auch nicht zu früh und nicht unnötig eingeleitet wird. Eine verfrühte oder überflüssige Einleitung des Notbremsvorgangs stellt nicht nur eine erhebliche Beeinträchtigung des Komforts dar, sondern kann auch zu einer Irritation des Nachfolgeverkehrs führen und damit ihrerseits zu einer Unfallursache werden.

### Aufgabe, Lösung und Vorteile der Erfindung

Aufgabe der Erfindung ist es deshalb, ein Verfahren und eine Steuervorrichtung anzugeben, mit denen es möglich ist, den Zeitpunkt für die Einleitung des Notbremsvorgangs zu optimieren.

Diese Aufgabe wird bei einem Verfahren der eingangs genannten Art durch die Merkmale von Anspruch 1 gelöst.

Die vorgeschlagene Lösung weist somit eine gewisse Analogie zu den Maßnahmen auf, die bei dem oben beschriebenen Verfahren zur Abstandsregelung angewandt werden, doch stehen diese Maßnahmen hier in einem anderen Kontext, und sie dienen zur Verfolgung einer anderen Zielsetzung. Die Zielsetzung bei der Erfindung besteht darin, die zeitliche Verzögerung zwischen der Warnbremsung und der Auslösung der eigentlichen Notbremsung in Abhängigkeit von dem ermittelten Verzögerungsvermögen des Fahrzeugs zu modifizieren. Dabei geht die Erfindung von der Überlegung aus, daß zwischen der Warnbremsung und der Einleitung der eigentlichen Notbremsung im Normalfall eine bestimmte Wartezeit vergehen sollte, typischerweise in der Größenordnung von 1 Sekunde oder etwas weniger, die dem Fahrer Gelegenheit gibt, sich auf die Gefahrensituation einzustellen und sich auf ein etwa notwendiges Ausweichmanöver vorzubereiten. Wenn sich nun aber bei der Wambremsung ergibt, daß das Verzögerungsvermögen des Fahrzeugs aufgrund des aktuellen Fahrbahnzustands stark vermindert ist, so kann die normalerweise sinnvolle Wartezeit beträchtlich verkürzt werden, im Extremfall bis auf null, so daß in diesem Sonderfall die Notbremsung entsprechend früher eingeleitet werden kann.

Da die Warnbremsung der Notbremsung unmittelbar vorausgeht, repräsentiert das bei der Warnbremsung ermittelte Verzögerungsvermögen des Fahrzeugs mit hoher Zuverlässigkeit den aktuellen Fahrbahnzustand, so daß der Zeitpunkt für die Einleitung der Notbremsung angemessen gewählt werden kann. Zugleich gewinnt man durch das variable Intervall zwischen der Warnbremsung und der Notbremsung einen gewissen Spielraum, der es gestattet, für die Einleitung der Wambremsung einen verhältnismäßig späten Zeitpunkt festzulegen und so die Häufigkeit von unnötigen Fehlwarnungen zu vermindern, die die Akzeptanz des Systems insgesamt in Frage stellen würden.

Vorteilhafte Ausgestaltungen der Erfindung ergeben sich aus den Unteransprüchen.

Als geeignetes Maß für die erreichbare Fahrzeugverzögerung, die bei der Warnbremsung ermittelt wird, wird der Reibungskoeffizient zwischen Reifen und Fahrbahnoberfläche angesehen, der auch im Rahmen eines ESP-Systems benötigt und ermittelt wird. Die erreichbare Fahrzeugverzögerung kann jedoch auch durch andere Größen beeinflußt werden, insbesondere durch die Zuladung, die bei einigen modernen Fahrzeugtypen, bei sogenannten Vans, einen beträchtlichen Anteil des Gesamtgewichts erreichen und somit einen maßgeblichen Einfluß auf das Bremsverhalten haben kann. Auch der Einfluß dieser Zuladung kann bei der Warnbremsung ermittelt und dann angemessen berücksichtigt werden.

Da der Reibungskoeffizient und ggf. die Zuladung auch im Rahmen der ESP-Funktion während der eigentlichen Notbremsung benötigt werden, bietet die Erfindung zugleich die vorteilhafte Möglichkeit, diese schon bei der Warnbremsung ermittelten Größen im ESP-System zu speichern, so daß sie dort bei der Notbremsung von Anfang an zur Verfügung stehen und eine gezieltere, insbesondere schnellere Einleitung des Bremsvorgangs ermöglichen.

Für eine möglichst genaue Bestimmung des Verzögerungsvermögens ist es zweckmäßig, den Bremsdruck während der Warnbremsung so weit zu erhöhen, daß es kurzfristig zu einem Blockieren mindestens eines Rades und damit zu einem maximalen Schlupf kommt. Für das blockierte Rad kann dann der Reibungskoeffizient mit bekannten Verfahren präzise bestimmt werden, beispielsweise anhand der Bremskraft, bei der das Rad blockiert, oder wahlweise auch anhand der Winkelbeschleunigung, mit der das Rad nach dem Lösen der Bremse wieder beschleunigt. Diese Winkelbeschleunigung ist gegeben durch den Quotienten aus dem vom Reibungskoeffizienten abhängigen Drehmoment und dem bekannten Trägheitsmoment des Rades.

Da bei der Wambremsung noch keine maximale Fahrzeugverzögerung erwünscht ist, bietet es sich an, bei der Warnbremsung nur die Räder einer einzigen Achse des Fahrzeugs zu bremsen, vorzugsweise die Räder der angetriebenen Achse. Durch Vergleich der Radgeschwindigkeiten der gebremsten Räder einerseits und der freilaufenden (schlupffreien) Räder andererseits wird dann eine präzise Bestimmung des Schlupfes der gebremsten Räder ermöglicht.

Bei sehr griffiger Fahrbahn und entsprechend großem Reibungskoeffizienten ist es im Zuge der Warnbremsung unter Umständen nicht möglich oder nicht sinnvoll, die gebremsten Räder tatsächlich bis zur Blockiergrenze zu bremsen. Es ist deshalb zweckmäßig, die Bremskraft während der Warnbremsung nur bis zu einem bestimmten Maximalwert zu erhöhen. Wenn dieser Maximalwert erreicht wird, ohne daß ein nennenswerter Schlupf an den gebremsten Rädern auftritt, so deutet dies auf einen hohen Reibungskoeffizienten der Fahrbahn hin, und anstelle des gemessenen Reibungskoeffizienten wird dann bei Bestimmung des Zeitpunkts für die eigentliche Notbremsung ein entsprechend hoher Schätzwert für den Reibungskoeffizienten zugrundegelegt.

### Kurzbeschreibung der Zeichnung

Im folgenden wird ein Ausführungsbeispiel der Erfindung anhand der Zeichnung näher erläutert.

Es zeigen:
- Fig. 1: ein Blockdiagramm einer Steuervorrichtung zur Durchführung des Verfahrens;
- Fig. 2(A) und (B): den zeitlichen Verlauf der Bremskraft und des Radschlupfes bei einem Notbremsvorgang auf griffiger Fahrbahn; und
- Fig. 3(A) und (B): Zeitdiagramme analog zu Figuren 2(A) und (B) für einen Notbremsvorgang auf glatter Fahrbahn.

### Beschreibung eines Ausführungsbeispiels

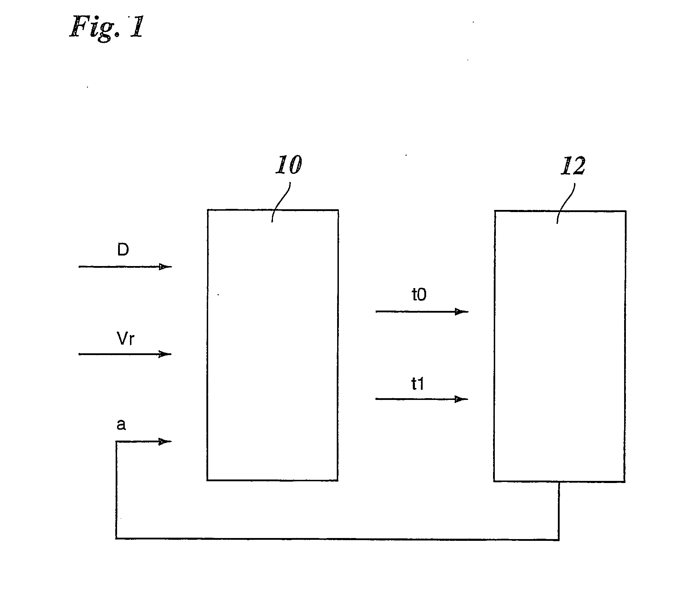

Figur 1 zeigt als Blockdiagramm eine Steuervorrichtung für eine automatische Notbremse in einem Kraftfahrzeug. Die Steuervorrichtung umfaßt eine Situationsbewertungseinheit 10 und eine ABS/ESP-Steuereinheit 12. Die Situationsbewertungseinheit 10 kann beispielsweise Teil eines ACC-Systems (Automatic Cruise Control) sein und erhält Signale von einem nicht gezeigten Radarsystem, mit dem vor dem Fahrzeug befindliche Objekte geortet werden. Die ABS/ESP-Steuereinheit 12 dient generell zur Steuerung von Bremsvorgängen, einschließlich solcher, die vom Fahrer selbst oder durch das ACC-System veranlaßt werden, sowie zur Stabilisierung der Fahrdynamik und hat insbesondere die Funktion, den Bremsdruck an allen gebremsten Rädern des Fahrzeugs so zu steuern oder regeln, daß eine ausreichende Fahrbahnhaftung der Reifen gewährleistet wird.

Bei den Daten, die die Situationsbewertungseinheit 10 für jedes geortete Objekt vom Radarsensor erhält, handelt es sich um den gemessenen Abstand D des Objekts, die anhand der Dopplerverschiebung bestimmte Relativgeschwindigkeit Vr des Objekts sowie um Winkeldaten (nicht gezeigt), auf deren Grundlage sich entscheiden läßt, ob sich das geortete Objekt auf der eigenen Fahrspur befindet und somit ein relevantes Hindernis darstellt. Der Einfachheit halber wird in Figur 1 angenommen, daß nur ein einziges relevantes Objekt vorhanden ist. Aufgrund der Abstands- und Relativgeschwindigkeitsdaten entscheidet die Situationsbewertungseinheit 10, ob die Gefahr einer Kollision besteht. Dazu berechnet die Situationsbewertungseinheit 10, ob die gemessene Relativgeschwindigkeit Vr bei einer Vollbremsung des eigenen Fahrzeugs innerhalb des Abstands D auf null reduziert werden könnte bzw. welche Rest-Relativgeschwindigkeit (Aufprallgeschwindigkeit) verbleibt, wenn der Abstand D auf null abgenommen hat. Für die Berechnung der Verzögerung des eigenen Fahrzeugs bei Vollbremsung muß dabei ein realistischer Wert zugrundegelegt werden, der, soweit keine Vorkenntnisse vorhanden sind, auf einer plausiblen Schätzung für den Reibungskoeffizienten der Fahrbahn und für das Eigengewicht des Fahrzeugs beruht. Für das Eigengewicht des Fahrzeugs werden in der Regel Vorkenntnisse verfügbar sein, da sich dieses Eigengewicht im Rahmen der ACC-Regelung anhand des Beschleunigungsverhaltens des Fahrzeugs und anhand des im Motormanagementsystem verfügbaren Antriebsdrehmoments mehr oder minder genau abschätzen läßt. Auch für den Reibungskoeffizienten der Fahrbahn können bereits Vorkenntnisse vorhanden sein, insbesondere bei Fahrten auf eis- oder schneeglatter Fahrbahn, da dann das ESP-System häufig im Rahmen einer AntriebsSchlupfregelung aktiv werden wird und im Rahmen dieser Regelung auch der Reibungskoeffizient der Fahrbahn ermittelt und ausgewertet wird. Im allgemeinen Fall, wenn solche Vorkenntnisse nicht vorhanden sind, wird der Reibungskoeffizient aufgrund der Annahme einer trockenen, normal griffigen Fahrbahn geschätzt. Verfeinerungen sind möglich, etwa in der Form, daß bei dauernd eingeschaltetem Scheibenwischer ein Schätzwert für eine nasse Fahrbahn zugrundegelegt wird.

Anhand des so abgeschätzten Verzögerungsvermögens des Fahrzeugs wird dann die Kollisionsgefahr abgeschätzt, und es wird ein Zeitpunkt t0 bestimmt, bei dem wegen akuter Kollisionsgefahr zunächst eine Warnbremsung einzuleiten ist. Weiterhin wird ein vorläufiger Wert t1 für die eigentliche Notbremsung bestimmt, die mit einer bestimmten zeitlichen Verzögerung von beispielsweise 0,8 s auf die Warnbremsung folgt. In die Bewertung der Kollisionsgefahr und somit in die Bestimmung der Zeitpunkte t0 und t1 kann auch die Dynamik des Hindernisses einfließen, etwa durch Berücksichtigung der zeitlichen Ableitung der gemessenen Relativgeschwindigkeit Vr. Wenn es sich beispielsweise bei dem Hindernis um ein vorausfahrendes Fahrzeug handelt, das seinerseits eine Vollbremsung einleitet, so wird bei im wesentlichen unveränderter Eigengeschwindigkeit des eigenen Fahrzeugs die (negative) Relativgeschwindigkeit Vr dem Betrage nach rasch zunehmen, und es läßt sich abschätzen, wann das vorausfahrende Fahrzeug in den Stand abgebremst sein wird.

Da häufige Fehlwarnungen zu vermeiden sind, wird es bei der Bestimmung der Zeitpunkte t0 und t1 in der Praxis zumeist nicht möglich sein, eine strikte Kollisionsvermeidungsstrategie zu verfolgen. Vielmehr werden die Zeitpunkte t0 und t1 so bestimmt werden, daß es auch dann, wenn zur Zeit t1 die Notbremsung eingeleitet wird, zu einem Aufprall kommt, sofern nicht der Fahrer ein Ausweichmanöver vornimmt oder die Situation auf andere Weise bereinigt wird. Allerdings werden die Zeitpunkte t0 und t1 so gewählt werden, daß die Aufprallgeschwindigkeit zumindest so weit reduziert ist, daß sie unter normalen Umständen nicht zu einer Verletzung der Fahrzeuginsassen führt. In die Bestimmung der zugelassenen Aufprallgeschwindigkeit fließen dann auch fahrzeugspezifische Daten über das Crash-Verhalten des Fahrzeugs ein, ebenso das Vorhandensein oder Nichtvorhandensein passiver Sicherheitssysteme wie eines Airbags und dergleichen.

Wenn die Zeitpunkte t0 und t1 in dieser Weise bestimmt worden sind, so erhält zur Zeit t0 die ABS/ESP-Steuereinheit 12 den Befehl, eine Warnbremsung einzuleiten. Im Zuge dieser Warnbremsung wird die Bremskraft stetig erhöht, und das ESP-System prüft, ob ein Schlupf an den gebremsten Rädern auftritt. Beispielsweise wird die Warnbremsung nur mit den Hinterrädern durchgeführt, so daß die Radgeschwindigkeit der Vorderräder als Referenz für die Berechnung des Schlupfes S benutzt werden kann. Der Schlupf läßt sich dann beispielsweise berechnen als S = (Vu - Vb) / Vu, wobei Vu die Radgeschwindigkeit der ungebremsten Räder und Vb die Radgeschwindigkeit der gebremsten Räder ist. Wenn die gebremsten Räder blockieren (Vb = 0) gilt also S = 1. Anhand des gemessenen Schlupfes S und der bekannten Bremskraft F läßt sich dann der Reibungskoeffizient der Fahrbahn bzw. das Verzögerungsvermögen des Fahrzeugs bestimmen, ausgedrückt z. B. durch einen negativen Beschleunigungswert a. Dieses Verzögerungsvermögen a wird an die Situationsbewertungseinheit 10 zurückgemeldet und dient dort dazu, den zunächst nur vorläufig berechneten Zeitpunkt t1 zu korrigieren, um dem nun genauer bekannten Reibungskoeffizienten der Fahrbahn Rechnung zu tragen. Bei einem niedrigen Reibungskoeffizienten und entsprechend kleinerem Verzögerungsvermögen wird der Zeitpunkt t1 vorverlegt, so daß die eigentliche Notbremsung entsprechend früher eingeleitet wird.

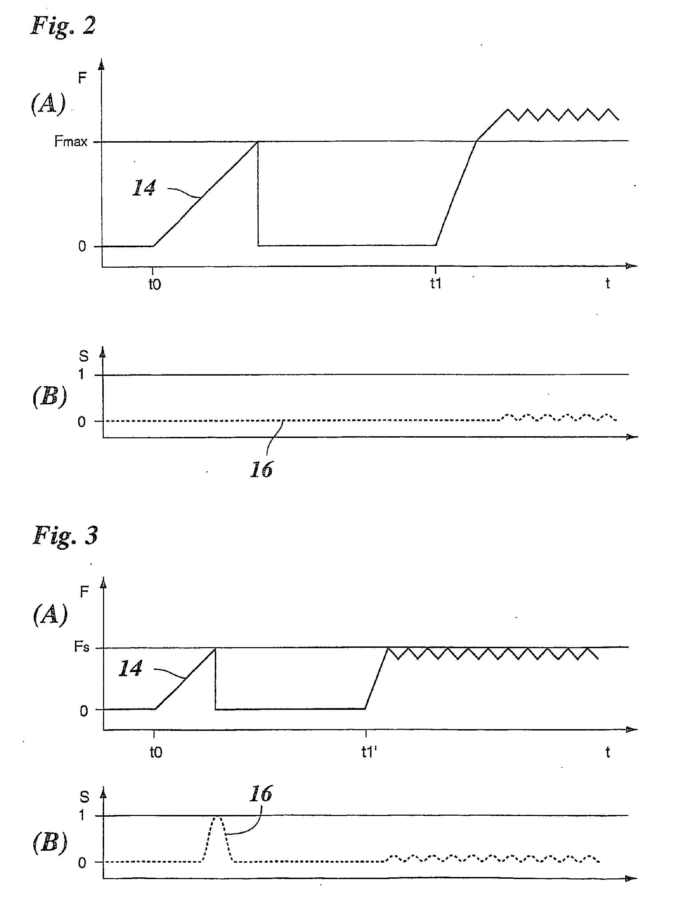

Diese Vorgänge sind in Figuren 2 und 3 an zwei Beispielen veranschaulicht.

In Figur 2(A) ist auf der waagerechten Achse die Zeit t und auf der senkrechten Achse die Bremskraft F aufgetragen, die auf die gebremsten Räder wirkt. Die Kurve 14 gibt den zeitlichen Verlauf der Bremskraft an. Zu dem von der Situationsbewertungseinheit 10 berechneten Zeitpunkt t0 wird die Warnbremsung eingeleitet. Im Zuge dieser Warnbremsung wird die Bremskraft F stetig mit einer bestimmten Anstiegsrate erhöht, und der eventuelle Schlupf an den gebremsten Rädern wird gemessen. Die gestrichelte Kurve 16 in Figur 2(B) gibt den gemessenen Schlupf an. Im angenommenen Beispiel zeigt sich, daß während der Wambremsung kein Schlupf auftritt. Das bedeutet, daß die Fahrbahn einen relativ hohen Reibungskoeffizienten hat (wie ursprünglich geschätzt). Deshalb braucht der vorläufig angenommene Wert t1 für den Zeitpunkt der Einleitung der Notbremsung nicht verändert zu werden. Die Warnbremsung wird abgebrochen, sobald die ausgeübte Bremskraft F (oder das Bremsdrehmoment oder ein vergleichbarer Parameter) einen bestimmten Maximalwert Fmax erreicht.

Zum Zeitpunkt t1 wird dann die eigentliche Notbremsung eingeleitet. Da nun bereits bekannt ist, daß die Fahrbahn verhältnismäßig griffig ist und bei Bremskräften unterhalb von Fmax noch kein Schlupf auftreten wird, kann die Bremskraft hier zumindest bis zum Punkt Fmax mit höherer Anstiegsrate vergrößert werden, so daß der Bremsvorgang entsprechend schneller eingeleitet wird. Bei der weiteren Steigerung der Bremskraft über Fmax hinaus kann es dann zweckmäßig sein, die Anstiegsrate etwas zu reduzieren, damit das Einsetzen des Radschlupfes rechtzeitig erkannt und ein Überschießen des Systems vermieden werden kann. Sobald dann der Radschlupf einsetzt (Kurve 16), wird die Bremskraft in bekannter Weise im Rahmen einer ABS-Regelung moduliert, und das Fahrzeug wird sicher in den Stand gebremst.

Figur 3 illustriert den gleichen Vorgang bei glatter Fahrbahn. Zum berechneten Zeitpunkt t0 wird die Warnbremsung eingeleitet. Wegen des kleineren Reibungskoeffizienten der Fahrbahn setzt nun jedoch bereits bei einer kleineren Bremskraft Fs ein Radschlupf ein, wie die Kurve 16 in Figur 3(B) zeigt. Die Warnbremsung wird mit weiter zunehmender Bremskraft fortgesetzt, bis der Schlupf S einen bestimmten Grenzwert ( 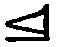 ) erreicht, z.B., bis das gebremste Rad blockiert. Erst dann wird die Warnbremsung abgebrochen. Auf diese Weise läßt sich anhand des dynamischen Verhaltens des gebremsten Rades präzise der Reibungskoeffizient der Fahrbahn bestimmen, und das sich daraus ergebende Verzögerungsvermögen a des Fahrzeugs wird an die Situationsbewertungseinheit 10 zurückgemeldet. Diese Einheit korrigiert daraufhin den Zeitpunkt t1 für die Einleitung der Notbremsung. In Figur 3(A) ist zu erkennen, daß die Notbremsung nun bereits zu einem früheren Zeitpunkt t1' beginnt. Je kleiner der gemessene Reibungskoeffizient der Fahrbahn ist, desto weiter wird der Zeitpunkt t1' vorverlegt, im Extremfall, bei sehr glatter Fahrbahn, kann er so weit vorverlegt werden, daß sich die Notbremsung ohne Unterbrechung an die Warnbremsung anschließt.

Sofern eine gewisse Verzögerungszeit zwischen der Warnbremsung t0 und der Notbremsung bei t1' verbleibt, wird auch hier zur Zeit t1' die Bremskraft F mit hoher Anstiegsrate bis zu dem Wert Fs erhöht. Da dieser Wert bereits bekannt ist, kann trotz des raschen Bremsdruckaufbaus ein Überschießen des Bremsdruckes vermieden werden. Anschließend wird der Bremsdruck wieder in der üblichen Weise moduliert.

Durch die Vorverlegung des Zeitpunkts t1' für die Einleitung der Notbremsung wird somit insgesamt die zur Verfügung stehende Bremszeit vergrößert, so daß die anfängliche Fehleinschätzung des Verzögerungsvermögens a zumindest zum Teil wieder kompensiert werden kann. Weiterhin ermöglicht es die frühzeitige Bekanntheit der Blockiergrenze, die Einleitung des Notbremsvorgangs zu optimieren.

## Patentansprüche

1. Verfahren zur automatischen Einleitung eines Notbremsvorgangs mit vorausgehender Warnbremsung bei Kraftfahrzeugen, **dadurch gekennzeichnet, dass** während der Warnbremsung mindestens ein Rad bis an die Blockiergrenze verzögert wird und dann für das blockierte Rad der momentane Reibkoeffizient zwischen Fahrbahn und Rad ermittelt wird und in Abhängigkeit des ermittelten Reibkoeffizienten die Zeitdauer zwischen der Auslösung der Warnbremsung und der Auslösung der Notbremsung variiert wird.

2. Verfahren nach Anspruch 1, **dadurch gekennzeichnet, dass** bei der Warnbremsung nur die Räder einer Achse des Fahrzeugs gebremst werden.

3. Verfahren nach Anspruch 2, **dadurch gekennzeichnet, dass** die gebremsten Räder der nur einen Achse die Räder der angetriebenen Achse sind.

4. Verfahren nach Anspruch 1, **dadurch gekennzeichnet, daß** bei der Warnbremsung die Bremskraft (F) erhöht wird, bis mindestens ein Rad die Blockiergrenze erreicht oder bis die Bremskraft oder eine damit korrelierende Zustandsgröße einen bestimmten Maximalwert (Fmax) erreicht, und daß, wenn der Maximalwert erreicht wird, ohne daß ein Rad die Blockiergrenze erreicht hat, ein hoher Schätzwert für den Reibungskoeffizienten zugrundegelegt wird.

5. Verfahren nach Anspruch 4, **dadurch gekennzeichnet, daß** der bei der Warnbremsung ermittelte Reibungskoeffizient bei der Steuerung des Bremsdruckaufbaus bei der Einleitung der Notbremsung berücksichtigt wird.

6. Steuervorrichtung, die das Verfahrens nach einem der vorstehenden Ansprüche durchführt, **dadurch gekennzeichnet, daß** eine Situationsbewertungseinheit (10) dazu ausgebildet ist, anhand des gemessenen Abstands (D) eines Hindernisses und der gemessenen Relativgeschwindigkeit (Vr) dieses Hindernisses sowie anhand eines vorläufigen Wertes für die Fahrzeugverzögerung (a) einen Zeitpunkt (t0) für die Einleitung einer Warnbremsung und einen späteren, vorläufigen Zeitpunkt (t1) für die Einleitung einer Notbremsung zu bestimmen, daß eine ABS/ESP-Steuereinheit (12), die dazu ausgebildet ist, den Bremsdruck in Abhängigkeit vom Schlupfzustand der gebremsten Räder zu modulieren und dabei den Reibungskoeffizienten der Fahrbahn zu berechnen, den Reibungskoeffizienten bei der Warnbremsung ermittelt und an die Situationsbewertungseinheit (10) meldet und daß die Situationsbewertungseinheit (10) anhand der Fahrzeugverzögerung (a), die durch den ermittelten Reibungskoeffizienten gegeben ist, den vorläufig angenommenen Zeitpunkt (t1) für die Einleitung der Notbremsung korrigiert.

## Claims

1. Method for automatically initiating an emergency braking process with preceding warning braking process in motor vehicles, **characterized in that** during the warning braking process at least one wheel is decelerated as far as the locking limit and then the instantaneous coefficient of friction between the underlying surface and the wheel is acquired for the locked wheel and the time period between the triggering of the warning braking process and the triggering of the emergency braking process is varied as a function of the acquired coefficient of friction.

2. Method according to Claim 1, **characterized in that** during the warning braking process only the wheels of one axle of the vehicle are braked.

3. Method according to Claim 2, **characterized in that** the braked wheels of the just one axle are the wheels of the driven axle.

4. Method according to Claim 1, **characterized in that** during the warning braking process the braking force (F) is increased until at least one wheel reaches the locking limit or until the braking force or a state variable which correlates thereto reaches a specific maximum value (Fmax), and **in that**, if the maximum value is reached without a wheel reaching the locking limit, a high estimated value for the coefficient of friction is used as the basis.

5. Method according to Claim 4, **characterized in that** the coefficient of friction which is acquired during the warning braking process is taken into account in the control of the build-up of brake pressure during the initiation of the emergency braking process.

6. Control device which carries out the method according to one of the preceding claims, **characterized in that** a situation evaluation unit (10) is designed to determine, by means of the measured distance (D) from an obstacle and the measured relative speed (Vr) of this obstacle as well as by means of a temporary value for the deceleration (a) of the vehicle, a time (t0) for the initiation of a warning braking process and a later, temporary time (t1) for the initiation of an emergency braking process, **in that** an ABS/ESP control unit (12) is designed to modulate the brake pressure as a function of the slip state of the braked wheels and in doing so to calculate the coefficient of friction of the underlying surface, acquires the coefficient of friction during the warning braking process and signals it to the situation evaluation unit (10), and **in that** the situation evaluation unit (10) corrects the temporarily assumed time (t1) for the initiation of the emergency braking process by means of the deceleration (a) of the vehicle which is given by the acquired coefficient of friction.

## Revendications

1. Procédé de déclenchement automatique d'un processus de freinage de secours précédé d'un freinage d'avertissement pour des véhicules automobiles,
**caractérisé en ce que**
pendant le freinage d'avertissement, décélère au moins une roue jusqu'à la limite de blocage et ensuite on détermine pour cette roue bloquée, le coefficient de friction instantané entre la chaussée et la roue et en fonction du coefficient de friction obtenu, on varie la durée entre le déclenchement du freinage d'avertissement et le déclenchement du freinage de secours.

2. Procédé selon la revendication 1,
**caractérisé en ce que**
lors du freinage d'avertissement, on freine uniquement les roues d'un essieu du véhicule.

3. Procédé selon la revendication 2,
**caractérisé en ce que**
les roues freinée de seulement un essieu sont les roues de l'essieu moteur.

4. Procédé selon la revendication 1,
**caractérisé en ce que**
lors du freinage d'avertissement on augmente la force de freinage (F) jusqu'à ce qu'au moins une roue atteignent la limite de blocage ou jusqu'à ce que la force de freinage ou une grandeur d'état, en corrélation avec celle-ci, atteigne une valeur maximale définie (Fmax) et **en ce que** si la valeur maximale est atteinte, sans qu'une roue n'ait atteint la limite de blocage, on se fonde sur une valeur d'évaluation plus élevée pour les coefficients de friction.

5. Procédé selon la revendication 4,
**caractérisé en ce que**
le coefficient de friction obtenu lors du freinage d'avertissement est pris en compte pour la commande de l'établissement de la pression de freinage, pour déclencher le freinage de secours.

6. Dispositif de commande mettant en oeuvre le procédé selon l'une des revendications précédentes,
**caractérisé en ce qu'**
une unité d'exploitation de situation (10) est conçue pour qu'à l'aide de la distance (D) mesurée d'un obstacle et la vitesse relative mesurée (Vr) de cet obstacle ainsi qu'à l'aide d'une valeur provisoire de la décélération (a) du véhicule, on détermine un instant (t0) pour déclencher un freinage d'avertissement et on détermine un instant ultérieur provisoire, (t1) pour lancer un freinage de secours,
l'unité de commande ABS/ESP (12) est réalisée pour moduler la pression de frein en fonction de l'état de patinage des roues freinées et calculer ainsi les coefficients de friction de la chaussée, déterminer les coefficients de frictions pour le freinage d'avertissement et informer l'unité d'exploitation de situation (10) et l'unité d'exploitation de situation (10) corrige l'instant fixé provisoirement (t1) pour déclencher le freinage de secours à l'aide des coefficients de friction obtenus.
